(19) **Europäisches Patentamt / European Patent Office / Office européen des brevets**

(11) **EP 4 765 823 A1**

(12) **EUROPEAN PATENT APPLICATION**

(43) Date of publication:
24.06.2026 Bulletin 2026/26

(21) Application number: 24307250.1

(22) Date of filing: 20.12.2024

(51) International Patent Classification (IPC):
$H04N\ 19/91^{(2014.01)}$    $G06N\ 3/045^{(2023.01)}$
$G06N\ 3/0495^{(2023.01)}$    $G06N\ 3/084^{(2023.01)}$

(52) Cooperative Patent Classification (CPC):
H04N 19/91; G06N 3/045; G06N 3/048;
G06N 3/0495; G06N 3/08; G06N 3/084

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(71) Applicant: InterDigital CE Patent Holdings, SAS
75017 Paris (FR)

(72) Inventors:
• DAMODARAN, Bharath Bhushan
  56000 VANNES (FR)
• LE MEUR, Olivier
  35160 TALENSAC (FR)
• SCHNITZLER, Francois
  56890 SAINT AVE (FR)
• LAMBERT, Anne
  35250 SAINT-AUBIN-D'AUBIGNE (FR)

(74) Representative: Vossius & Partner
Patentanwälte Rechtsanwälte mbB
Siebertstraße 3
81675 München (DE)

(54) **SIGNAL-SPECIFIC AND UNIVERSAL DICTIONARY BASED IMPLICIT NEURAL REPRESENTATION**

(57)    Systems, methods, and instrumentalities for signal-specific and universal dictionary based implicit neural representation. An example video decoding device may receive a coding block and video data associated with the coding block. The video data may indicate a signal-specific implicit neural representation (INR) dictionary, INR tail parameters, and a coefficient matrix. The device may determine a combined INR dictionary based on the signal-specific INR dictionary and a universal INR dictionary. The device may construct an INR based on the combined INR dictionary, the INR tail parameters, and the coefficient matrix. The device may reconstruct the coding block based on the INR.

**FIG. 7**

```
                    ┌─────────┐
                    │  Start  │
                    └─────────┘
                         │
                         ▼
          ┌──────────────────────────────┐
          │ Parsing a bitstream for signal│
          │     specific dictionary       │
          └──────────────────────────────┘
                         │
                         ▼
          ┌──────────────────────────────┐
          │ Decoding sparse coefficients  │
          │   and parameters of tail layer│
          └──────────────────────────────┘
                         │
                         ▼
          ┌──────────────────────────────┐
          │ Determining an approximation  │
          │ of parameters for head layer  │
          │           of INR              │
          └──────────────────────────────┘
                         │
                         ▼
    ┌──────────────────────────┐      ┌──────────────────────────┐
    │ Constructing the INR with │      │ Reconstruct portion of    │
    │ approximate parameters of  │─────▶│ video using constructed   │
    │ head layer and tail layer  │      │           INR             │
    │        parameters          │      └──────────────────────────┘
    └──────────────────────────┘
```

EP 4 765 823 A1

## Description

### BACKGROUND

The present application is related to video coding systems that may be used to compress digital video signals, e.g., to reduce the storage and/or transmission bandwidth needed for such signals. Video coding systems may include, for example, block-based, wavelet-based, and/or object-based systems.

### BRIEF SUMMARY

Systems, methods, and instrumentalities are disclosed herein for signal-specific and universal dictionary based implicit neural representation. An example device for video decoding may receive a coding block and video data associated with the coding block. The video data may indicate a signal-specific implicit neural representation (INR) dictionary, INR tail parameters, and a coefficient matrix. The device may determine a combined INR dictionary based on the signal-specific INR dictionary and a universal INR dictionary. The device may construct an INR based on the combined INR dictionary, the INR tail parameters, and the coefficient matrix. The device may reconstruct the coding block based on the INR.

The device may determine an approximation of INR head parameters based on the coefficient matrix and the combined INR dictionary. Constructing the INR may be further based on the approximation of the INR head parameters. The coefficient matrix may include mixture coefficients. The INR may be a mixture of experts model.

The coding block may be associated with a signal. A first part of the signal may include a frame of the signal. A second part of the signal may include remaining frames of the signal. Determining the signal-specific INR dictionary may be based on the first part of the signal. The signal-specific INR dictionary may be orthogonal to the universal INR dictionary.

The coding block may be a first coding block associated with a first frame. The INR tail parameters may be first INR tail parameters associated with the first frame. The coefficient matrix may be a first coefficient matrix associated with the first frame. The INR may be a first INR associated with the first frame. The video data may further indicate second INR tail parameters and a second coefficient matrix. The device may receive a second coding block associated with a second frame. The device may construct a second INR based on the combined INR dictionary, the second INR tail parameters, and the second coefficient matrix. The device may reconstruct the second coding block based on the second INR.

An example device for video encoding may determine a signal-specific dictionary. The device may determine a combined dictionary based on the signal-specific dictionary and a universal dictionary. The device may determine INR head parameters and INR tail parameters based on the combined dictionary. The device may determine a coefficient matrix based on the combined dictionary. The device may include, in video data, the signal-specific dictionary, the INR tail parameters, and the coefficient matrix.

The video data may include a signal. The device may split the signal into a first part of the signal and a second part of the signal. The first part of the signal may include a frame of the signal. The second part of the signal may include remaining frames of the signal. Determining the signal-specific dictionary may be based on the first part of the signal.

Determining the coefficient matrix may be further based on an approximation of the INR head parameters. The coefficient matrix may include mixture coefficients. The INR may be a mixture of experts model. The signal-specific dictionary may be orthogonal to the universal dictionary.

The INR head parameters may be first INR head parameters associated with a first frame. The INR tail parameters may be first INR tail parameters associated with the first frame. The coefficient matrix may be a first coefficient matrix associated with the first frame. The INR may be a first INR associated with the first frame. The device may determine second INR head parameters and second INR tail parameters associated with a second frame based on the combined dictionary. The device may determine a second coefficient matrix associated with the second frame based on the combined dictionary. The device may include, in the video data, the second INR tail parameters, and the second coefficient matrix.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.

FIG. 1 shows an example system according to one or more embodiments of the present disclosure.

FIG. 2 shows an example video encoder according to one or more embodiments of the present disclosure.

FIG. 3 shows an example video decoder according to one or more embodiments of the present disclosure.

FIG. 4 shows an example implicit neural network (INR).

FIG. 5 illustrates an example process to encode a signal using an INR.

FIG. 6 illustrates example encoding steps in accordance with feature(s) disclosed herein.

FIG. 7 illustrates example decoding steps in accordance with feature(s) disclosed herein.

## DETAILED DESCRIPTION

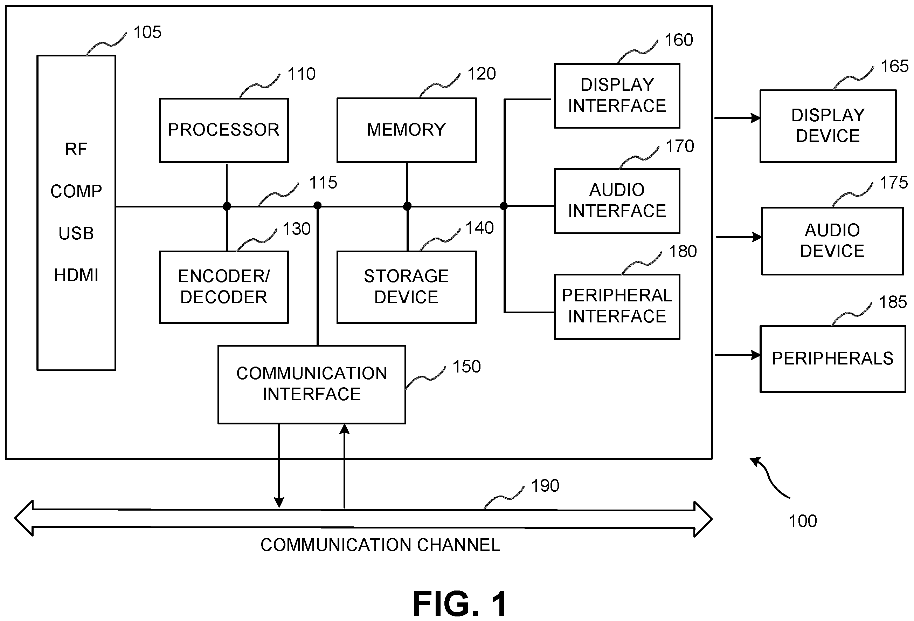

In describing the various embodiments of the present disclosure, certain terminology is used herein for convenience only and should not be considered as limiting such embodiments. In the drawings, the same reference numerals are employed for designating the same elements throughout the several figures and the present description.
Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.
One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.
The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.
The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.
The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.
Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.
In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.
The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., over-the-top (OTT) services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

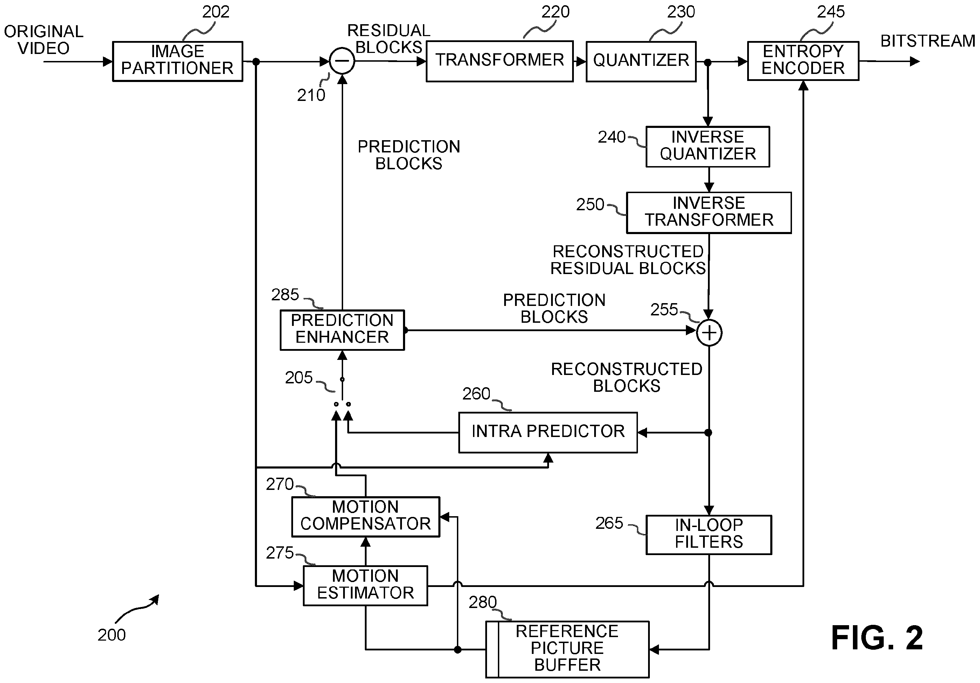

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (WC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

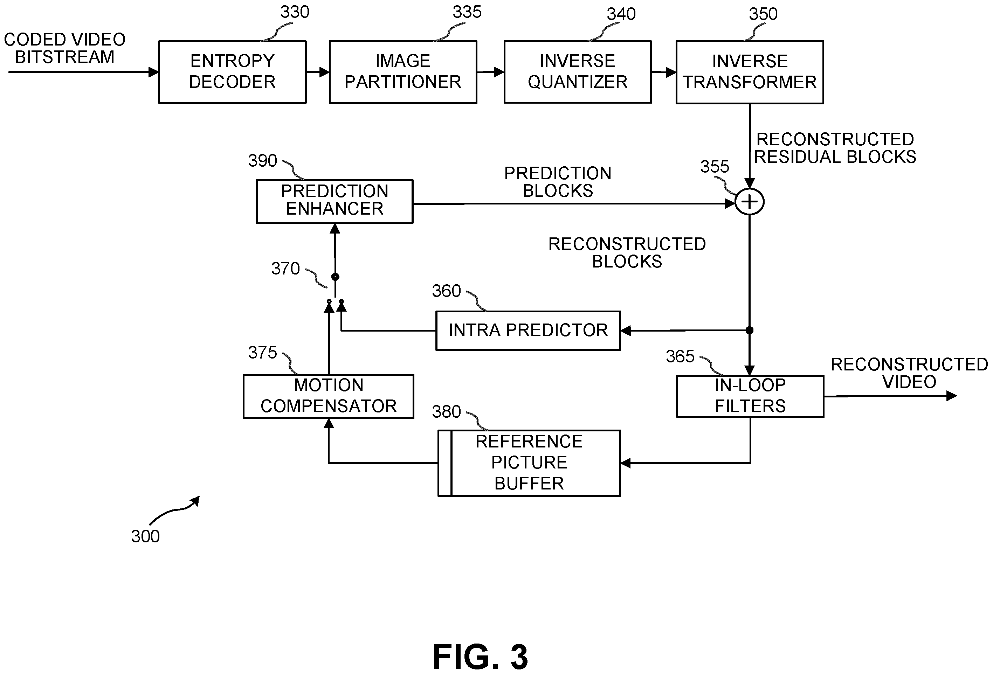

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C, Cb, Cr).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Feature(s) associated with neural compression are provided herein. For implicit neural representations (INR), there may be an ad hoc group (AhG). INR-based compression techniques may be used for 2D, video compression, and/or other signals (e.g., 3D scenes or objects). INR-based compression techniques may have a lower computational complexity than end-to-end neural compression.

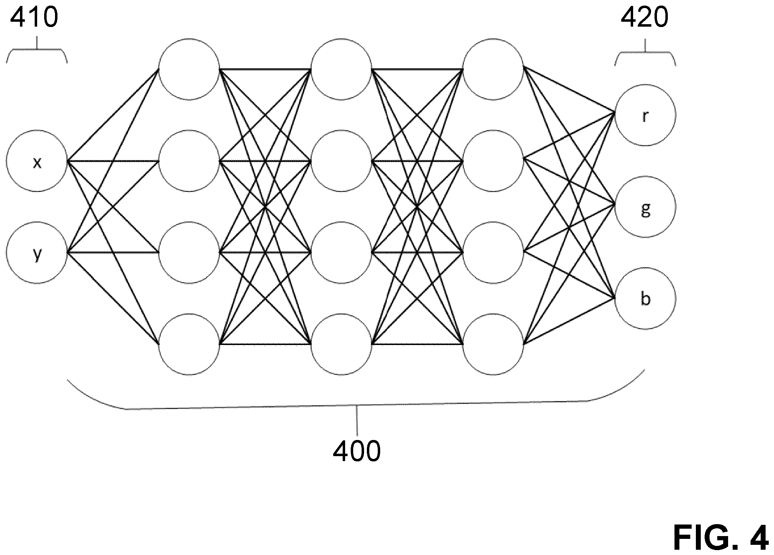

FIG. 4 shows a simple neural network used for implicit neural representation (INR). Such a neural network used for INR may be referred to as an INR network. INR may parameterize a signal as a function 400, which may take coordinates 410 as input and output values 420 of a signal at these coordinates. An INR may be applied to images, videos, or 3D objects among other applications. In the image case, the inputs 410 may be pixel coordinates (x, y) and the INR may output 420 the color values ($r,g,b$) or ($y,u,v$) of the input pixel. For video, the output may be similar. For video, the input may include the frame index t (e.g., in addition to pixel coordinates). The INR may be used to reconstruct a signal by computing the signal values for coordinate inputs (e.g., every necessary coordinate input).

An INR network 400 may be a neural network, which may be composed of multiple neural layers, such as fully connected layers. In FIG. 4, the network has four layers. Intermediate outputs may be represented by circles. Each neural layer may be described as a function that first multiplies the input by a tensor, adds a vector called the bias, and then applies a nonlinear function on the resulting values. The shape (e.g., and other characteristics) of the tensor and the type of non-linear functions may be called the architecture of the network. The values of the tensor and the bias may be denoted by the term weights. The weights and, if applicable, the parameters of the non-linear functions, may be called the parameters $\theta$ of the network. The architecture and the parameters may define a "model". $f_\theta$ may be used to denote an INR function parameterized by $\theta$.

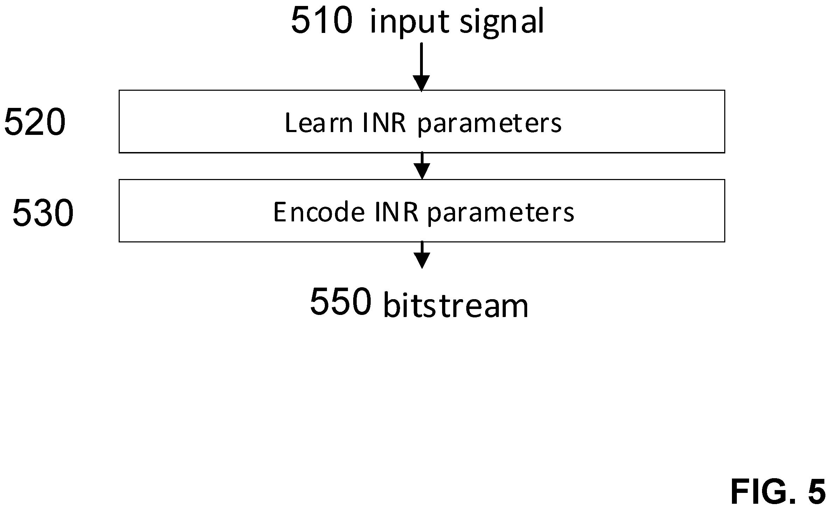

FIGs. 5-6 show processes to encode a signal using an INR. As shown in FIG. 5, the input signal at 510 may be encoded by optimizing the weights $\theta$ (e.g., or a subset of them) of the INR network to reconstruct the signal at 520 and encoding the signal at 530 to create the output bitstream 550. For an image $I$ of size (M $\times$ N), the weights $\theta$ may be optimized by minimizing the following loss function:

$$Loss = D(I, f_{\boldsymbol{\theta}}) + \lambda\, R(\theta)$$

$$D_{MSE} = \frac{1}{C} \sum_{x,y} (I(x, y) - f_{\boldsymbol{\theta}}(x, y))^2$$

$D$ may be a distortion which quantifies the difference between the reconstructed image by $f_\theta$ to the original image $I$. $R$ may be the bitrate of the encoded parameters and $\lambda$ a trade-off parameter between $D$ and $R$. $D$ may be any differentiable distortion measure, such as mean squared error as in the second equation. M and N may be the width and height of an image. Other metrics such as LPIPS (learned perceptual image patch similarity) may also be used in this case. The optimization of the weights $\theta$ may be performed by a machine learning approach such as a batch gradient descent method.

To decompress the signal, $f_\theta$ may be evaluated at all relevant coordinates. These coordinates may be selected at decoding (e.g., all pixel coordinates for an image or video). For example, for a 256x256 pixel image, these coordinates may be all pairs (x,y) for all $x \in \{0,1, ...,255\}$ and $y \in \{0,1, ...,255\}$. Other choices are possible, for example to upsample, downsample or extend the original image.

Using a (e.g., one) INR network globally (e.g., for the whole signal) may cause learning to be difficult (e.g., because all parameters contribute to all values and lead to a large network that encodes all details of the signal). A coding tree unit based implicit neural representation may be used. For example, the input domain may be a coding tree unit (CTU). The CTU may be partitioned into coding units (CU). The INR network may learn a set of different values for the INR parameters for a (e.g., each) coding unit.

In examples, a signal or a part of a signal may be encoded (e.g., better encoded) by approximating some parameters of the INR network using a dictionary approximation. By doing so, the INR network may be encoded using the weights of the non-approximated parts and additional information that describes the approximated parts. An INR may be divided into head $h$ layers and tail $t$ layers, as $f_\theta = t_{\theta_t} \cdot h_{\theta_h}$, and approximate $\theta_h$. This is an example of a decomposition into a composited representation, and other types of decompositions may be used without any loss of generality. For the approximation, a dictionary $D = [d_1, d_2, ... d_K]$ may be learned with K INR atoms so that each of the head layers may be approximated (e.g., represented) using a sparse linear combination of the atoms of the dictionary. That is,

$$\hat{\theta}_h = D\gamma \approx \theta_h$$

The sparse coefficients $\gamma$ may be approximated by optimizing the following loss function,

$$\arg\min_{\gamma} \|\theta_h - D\gamma\| + \alpha\, \|\gamma\|_1,$$

$\theta_h$ may be the weights of the head layers, $D$ may be the learnt dictionary, and $\gamma$ may be the sparse coefficients to be optimized. To enforce the sparsity in the coefficient vector, the L1 norm may be used and $\alpha$ may be the trade-off between the two terms in the equation.

In examples, a signal or a part of a signal may be encoded by approximating some layers of the INR network using a dictionary approximation. This may allow encoding the INR network using the weights of the non-approximated parts and some additional information that describes the approximated parts. In examples, an INR may be divided into head $h$ layers and tail $t$ layers, as $f_\theta = t_{\theta_t} \cdot h_{\theta_h}$, and approximate $h_{\theta_h}$. This is an example of a decomposition into a composited representation, and other types of decompositions may be used without any loss of generality. For the approximation, one may learn a dictionary D = [$f_{d_1}, f_{d_2}, ... f_{d_k}$] with k INR functions so that each head layer is approximated (e.g., represented) using a sparse linear combination of the atoms of the dictionary, for example:

$$\widehat{h_{\theta_h}} = \Sigma_{j=1}^{j=k} \gamma_j f_{d_j} \approx h_{\theta_h}.$$

Such an approximation may be achieved by a person of ordinary skill in the art by the optimization of the following cost:

$$arg\min_{\gamma} \sum_{x \in B} \left| I(x) - t_{\theta_t} \circ \sum_{i=1}^{i=k} \gamma_i f_{d_i}(x) \right|^2 + \beta |\gamma|_1$$

where B is the spatial support of the INR approximation (e.g., all images, blocks, superpixels, etc.). The optimization equation may be modified to optimize the dictionary $D$ and/or the weights $\theta_t$. The optimization equation may be modified to include additional losses (e.g., $l_1$ or $l_2$ losses) on one or more parameters.

In examples, a signal-specific dictionary may be used to encode a signal. This may apply to any of the techniques described herein.

In example, a signal-specific and universal dictionary representation may be used to encode the parameters of the non-approximated parts and approximated parts of the INR networks (e.g., both the signal-specific dictionary and the universal dictionary are used to encode both the parts of the INR networks).

The dictionary-based INR approximation may be learned (e.g., trained) using the signal-specific dictionary and universal dictionary. The universal dictionary may learn on the large data. The universal dictionary may be available to the encoder and decoder (e.g., thus involving no transmission cost). The signal-specific dictionary may learn on the parts of the underlying signal. Remaining parts may be approximated based on the signal-specific dictionary. In this case, the signal-specific dictionary may be transmitted to the decoder side.

The universal and signal specific dictionary of INR may be combined. By using joint learning, the signal-specific dictionary may encode the complementary information (e.g., of the underlying signal to be encoded) that was not captured by the universal dictionary. The use of the universal and signal-specific dictionary may improve the reconstruction quality of the signal.

The universal dictionary and signal-specific dictionary learning may be used to approximate the parts of the INR (e.g., head parameters of INR).

The universal dictionary and signal-specific dictionary may be used for encoding the approximated parts of the signal and non-approximated parts of the signal (e.g., using universal and signal-specific dictionary-based INR).

An example encoding procedure into the bitstream is provided herein. An example decoding procedure from the bitstream is provided herein.

The universal dictionary of INR may be available or may be learned. $U$ = [$u_1, u_2, ... u_m$] may be used to represent the universal dictionary with m atoms. The signal-specific dictionary may be learned (e.g., jointly) with the universal dictionary $U$.

$T$ may represent a signal that is partitioned into two parts (e.g., few parts of the signal, and remaining parts of the signal). The signal-specific dictionary may learn on the few parts of the signal. The signal-specific dictionary may be used to approximate the remaining parts of the signal (e.g., all the parts of the signal). The partition of the signal may be performed (e.g., in any general way). For example, the signal might be sub-divided into several parts. A (e.g., one) subset of the sub-divided parts may be chosen randomly or in a specific order. A (e.g., one) subset of the sub-divided parts may include the few parts of the signal. Although some feature(s) are described herein with respect to a 2D video signal, a person of ordinary skill in the art will appreciate that the feature(s) may be applied to any other type of signal.

$X$ may be used to represent an instance of a video with $N$ frames $\{X_1, X_2, ..., X_N\}$ to be transmitted. In an example, the signal may be partitioned into two parts: the first frame $X_1$, and the remaining frames.

The signal-specific dictionary of INR functions on the first frame may be computed as described herein. The first frame $X_1$ may be partitioned by the coding tree units (CTUs) (e.g., the partition may be superpixel, segmentation map, or any other partition). For example, the signal may be partitioned into K partitions. A (e.g., each) CTU may be approximated by the INR function. The INR function may take normalized pixel co-ordinates as the input. The INR function may output the pixel intensities (e.g., RGB, YUV, or any color space). The INR functions may be represented by $f_{\theta_1}, f_{\theta_2}, ... , f_{\theta_K}$. A (e.g., each) function may be of the form $f_{\theta_k} = f_{\theta_{t_k}} . f_{\theta_{h_k}}$, k = 1, ..., K, where $f_{\theta_{h_k}}$ is the head function; $f_{\theta_{t_k}}$ is the tail function of the $k^{th}$ CTU; and $\theta_{hk}$ and $\theta_{tk}$ are the head and tail parameters of the $k^{th}$ CTU, respectively.

$\Theta_H \in R^{L \times K} = [\theta_{h1}, \theta_{h2}, \ldots, \theta_{hk}]$ may represent the collection of head parameters of the INR functions belonging to all the CTUs. Learning the dictionary of head parameters may be represented using the following equation:

$$\arg \min_{\Gamma,D} \|\Theta_H - D\Gamma\| + \alpha \|\Gamma\|_1$$

where $D \in R^{L \times (P+M)} = [S, U]$, where $S = [\theta_{a1}, \theta_{a2}, \ldots, \theta_{aP}]$ is the signal-specific dictionary; $\theta_{ai}$ is the $i^{th}$ dictionary atom; $U$ is the universal dictionary; $\Gamma \in R^{(P+M) \times K}$ is the sparse coefficient matrix; $\|.\|_1$ is the L1 norm to enforce the sparsity in the coefficient matrix $\Gamma$; and $\alpha$ is the trade-off parameter to control the level of the sparsity (e.g., the higher the value of $\alpha$, the greater the level of sparsity). $V$ may represent the total number of atoms (e.g., where $V = P + M$). $D$ may represent the joint dictionary (e.g., including the signal-specific dictionary and the universal dictionary). In examples, the number of atoms of signal-specific dictionary part may be less than the number of atoms of the universal dictionary.

The atoms of the universal dictionary $U$ may be fixed (e.g., they are not updated during the optimization process). The optimization problem may be solved using alternative minimization by fixing a (e.g., one) variable and optimizing another variable. For example, given the dictionary $D$, the sparse coefficient matrix $\Gamma$ may be optimized using (e.g., any) sparse solvers (e.g., such as Lasso). The sparse coefficient matrix $\Gamma$ may be fixed and optimized for the dictionary $D$ using a (e.g., stochastic) gradient descent or co-ordinate descent method. These steps may be repeated until convergence or until a certain number of iterations have been performed. The signal-specific dictionary may learn the complementary information or fine-grained details that are captured by the universal dictionary.

A group sparsity regularizer (e.g., such as group lasso) may be used to introduce group sparsity in the dictionary atoms.

In examples, one or more (e.g., additional) constraints may be applied on the dictionary $D$ (e.g., orthogonality between the signal-specific part of dictionary $S$ and the universal part of the dictionary $U$). In this case, the signal-specific dictionary may learn (e.g., only learn) the complimentary information. The enforcement of orthogonality may be performed as follows:

$$\arg \min_{\Gamma,D} \|\Theta_H - D\Gamma\| + \alpha \|\Gamma\|_1$$

$$\text{Subject to } tr(S^T U) = 0$$

The above problem may be solved by the projected gradient descent (e.g., where the signal-specific dictionary $S$ is computed and projected onto the constraints using any orthogonalization procedure, for example, a house-holder transformation, gram-Schmidt orthogonalization, etc.). Without projected gradient descent, the solution may not be straightforward (e.g., because $S$ and $U$ may be of different sizes). In this case, the conversion to the surrogate form of the $S$ and $U$ may be performed using the radial basis kernels and projecting into the eigen space of a (e.g., one of the) radial basis kernels corresponding to $S$ or $U$.

Given the dictionary $D$ (e.g., which include the signal-specific and universal dictionary), for a (e.g., any) given CTU, the reconstruction based on the learned dictionary may be performed as described herein.

In examples, head parameter approximation may be performed. For a given CTU, the INR's head function parameters may approximated as:

$$\hat{\gamma} = \arg \min_{\gamma} \|\theta_h - D\gamma\| + \alpha \|\gamma\|_1$$

$$\hat{\theta}_h = D\hat{\gamma}$$

where $\gamma$ is the optimized sparse coefficient vector; $\alpha$ is the trade-off to control the sparsity; and $\hat{\theta}_h$ is the approximated head parameters of the given CTU. Then the reconstruction of the given CTU is performed as:

$$\widehat{I_{xy}} = f_{\theta_t} . f_{\hat{\theta}_h}(x, y), \forall (x, y) \in CTU$$

where $\theta_t$ is the trained parameter of the tail network corresponding to a given CTU; $\widehat{I_{xy}}$ is the reconstructed patch of the CTU partition; $I_{xy}$ is the corresponding patch of the ground truth CTU partition; and (x, y) is the normalized coordinates of the CTU partition.

In examples, a mixture of experts model may be used. For example, given the dictionary D, reconstruction of the given CTU may be formulated using the mixture of expert's model as:

$$\widehat{I_{xy}} = f_{\theta_t} \cdot \sum_v \gamma_v f_{\theta_{a_v}}(x, y), \forall (x, y) \in CTU, v = 1..V$$

where $\theta_{a_v}$ is the $v^{th}$ dictionary atom. The value of the mixture co-efficient $\gamma_v$ may be obtained.

The dictionary D on the first frame may include two parts: a signal-specific part (S) and a universal part (U). The signal-specific part may be encoded in the bitstream and transmitted to the decoder side. The signal-specific dictionary may be known to the decoder (e.g., for the rest of the frames). The signal-specific part of the dictionary D may be transmitted once (e.g., only once and known for all the remaining frames). In this case, the transmission cost of the signal-specific dictionary S is amortized over all the frames. In examples, this transmission cost may be negligible.

The joint signal-specific and universal dictionary may be learned on the first frame. The joint dictionary may be used for the reconstruction of the given CTU.

The encoding procedure may be performed. In a first example, the encoding procedure may use head parameter approximation. In a second example, the encoding procedure may use the mixture of experts model. A frame may be encoded using the mixture of experts model.

Given the dictionary D (e.g., including S and U) on the first frame, the reconstruction of the given CTU may be performed using the equation below. For a (e.g., each) CTU, the mixture coefficients and the tail parameters may be computed during encoding. These parameters may be computed by minimizing the following loss function:

$$\arg\min_{\gamma, \theta_t} \quad \|I_{xy} - f_{\theta_t} \cdot \sum_v \gamma_v f_{\theta_{a_v}(x,y)} \|_2$$

where $f_{\theta_t}$ is the tail network; $f_{\theta_{a_v}}$ is the head network with $v^{th}$ dictionary atom; $\gamma$ is a vector of mixture coefficients with $\gamma_v$ the $v^{th}$ coefficient; and $I_{xy}$ is the pixel intensities of the CTU block. If the unknown parameters are learned, the parameters may be encoded in the bitstream and transmitted.

The encoding procedure may be performed for each frame I. For each CTU, the parameters $\theta_t$ of the tail network and $\gamma$ may be computed.

$\theta_t$ may be entropy coded for the tail network and $\gamma$. $\theta_t$ and $\gamma$ may be stored.

The tail parameters of the CTUs may be represented by $\Theta_T^l = \left[ \theta_{t,}^{CTU_1} \theta_{t,...,}^{CTU_2} \theta_{t,}^{CTU_K} \right]$. The mixture coefficients may be represented by $\Gamma^l = [\gamma_{CTU_1}, ... , \gamma_{CTU_K}]$. $\Theta_T^l$ and $\Gamma^l$ may be encoded in the bitstream. Encoding the coefficients may involve using entropy coding.

The entropy coding may be performed individually (e.g., for each CTU) or at once (e.g., for all CTUs together). If the entropy coding is performed for all CTUs at once, the entropy coding may be more effective (e.g., because there are more symbols and entropy coding may better explore the redundancy).

The encoding techniques of these parameters may be standardized and/or known by both the encoder and the decoder. In examples, the encoder may be allowed to choose the encoding technique. In that case, the chosen technique may be included in the bitstream (e.g., and potentially entropy coded).

The decoder may decode the bitstream and perform reconstruction. The decoder may decode the signal-specific dictionary S from the bitstream. The decoder may construct the mixture of experts model or network $f_{\theta_{a_v}}'s$ with dictionary atoms from the signal-specific dictionary S and universal dictionary U.

For a (e.g., each) frame, the decoder may perform one or more actions. Parameters of (e.g., all) the CTUs may be encoded together. For example, the decoder may decode the mixture coefficients $\Gamma^l$ if all the mixture coefficients of CTUs are encoded together. The decoder may decode the tail parameters $\Theta_T^l$ if all the tail parameters of CTUs encoded together. The quantization parameters may be decoded and used during dequantization. The decoder may perform the dequantization using the quantization parameters.

If parameters were encoded individually (e.g., for each CTU block), the decoder may decode parameters for each CTU block. For example, the decoder may decode the mixture coefficients for each CTU (e.g., $\gamma_{CTU}$). The decoder may decode the tail parameters for each CTU (e.g., $\theta_{t,}^{CTU}$). The decoder may decode the quantization parameters and use the quantization parameters to perform dequantization. The decoder may construct the INR tail network $f_{\theta_{t,}^{CTU}}$ with the decoded parameter. The decoder may perform reconstruction of the CTU block as:

$$\widehat{I_{xy}} = f_{\theta_t} \cdot \sum_v \gamma_v^{CTU} f_{\theta_{a_v}(x,y)}$$

The data may be encoded with the mixture of experts model (e.g., using dictionary fine-tuning).

The signal-specific dictionary S may be fine-tuned (e.g., updated) on the first frame together with tail-parameters and mixture coefficients. In this case, the dictionary may be adapted to the reconstruction task (e.g., rather than relying on approximating the parameters of the head network).

The dictionary fine-tuning may be formulated as:

$$\arg\min_{\gamma,\theta_t,\Delta} \quad \|I_{xy} - f_{\theta_t} \cdot \Sigma_m \gamma_m f_{(\theta_{a_m} + \Delta_m)}(x,y)\|_{2,} \ m = 1\dots M$$

where $\Delta_m$ is the update of the $p_m^{th}$ dictionary atom of the signal-specific dictionary S through the fine-tuning. If this equation is optimized, the encoding of the frames with respect to the fine-tuned dictionary may be performed as described herein. For example, for each frame and for all the CTUs, the mixture coefficients and parameters of tail network may be written into the bitstream to reconstruct at the decoder side.

Dictionary fine-tuning may take more computational time for the first frame. For the rest of the frames, the computation time using dictionary fine-tuning may be similar to computation time without fine-tuning. The expected reconstruction quality may be higher with dictionary fine-tuning.

The initial dictionary values before fine-tuning may be obtained by different methods. In examples, the initial dictionary values may be obtained by approximating the parameters of the models learned on the first frame. In examples, the initial dictionary values may be random. Decoding may be performed as described herein.

Encoding may be performed with head parameter approximation. Given the joint dictionary *D*, encoding with head network parameter approximation may be performed as follows.

For a given frame, the CTU partitions may be computed. The encoder may learn the INR network (e.g., including head and tail layers ($\theta_t$)) for each CTU partition. The head layer may be approximated with the sparse combination of dictionary atoms. Let $\theta_h$ and $\theta_t$ be parameters of the head and tail layers. Writing $\theta_h$ into the bitstream may be costly because head layers have large capacity and a greater number of parameters. The head layer may be approximated by the sparse dictionary combination as:

$$\hat{\gamma} = \arg\min_{\gamma} \|\theta_h - D\gamma\| + \alpha \|\gamma\|_1$$

$$\hat{\theta}_h = D\hat{\gamma}$$

The $\gamma$ may be written into the bitstream. The signal-specific dictionary may be transmitted to the decoder side. $\gamma$ may be used to approximate the head parameters during decoding using the above equations.

During encoding, for a (e.g., each) frame, the encoder may perform one or more actions. For example, for a (e.g., each) CTU partition, the encoder may learn the INR and extract $\theta_h$ and $\theta_t$. The encoder may compute $\gamma$ as described herein. The encoder may encode $\gamma$ and $\theta_t$ into the bitstream. The encoding may involve entropic coding.

In examples, one or more steps may be omitted. For example, the $\hat{\gamma}$'s of the CTU may be gathered into a (e.g., single) array. The $\theta_t$'s of the CTU may be gathered into a (e.g., single) array. The encoder may then perform entropic coding.

The decoding from the bitstream and the reconstruction procedure may involve one or more of the following actions. The signal-specific dictionary S may be decoded from the bitstream. The decoder may construct the joint dictionary *D*. For a (e.g., each) frame and/or for a (e.g., each) CTU partition, the $\gamma$ and the $\theta_t$ may be decoded from the bitstream. The quantization parameters (if any) may be decoded (e.g., for the dequantization step). The decoder may perform dequantization.

The decoder may compute the approximation of the head parameters from the decoded dictionary and mixture coefficients as:

$$\hat{\theta}_h = D\hat{\gamma}$$

The decoder may construct the INR network with head layers $f_{\hat{\theta}_h}$ and tail layers $f_{\theta_t}$. The decoder may perform the reconstruction as:

$$\widehat{I_{xy}} = f_{\theta_t}.f_{\hat{\theta}_h}(x, y), \forall (x, y) \in CTU$$

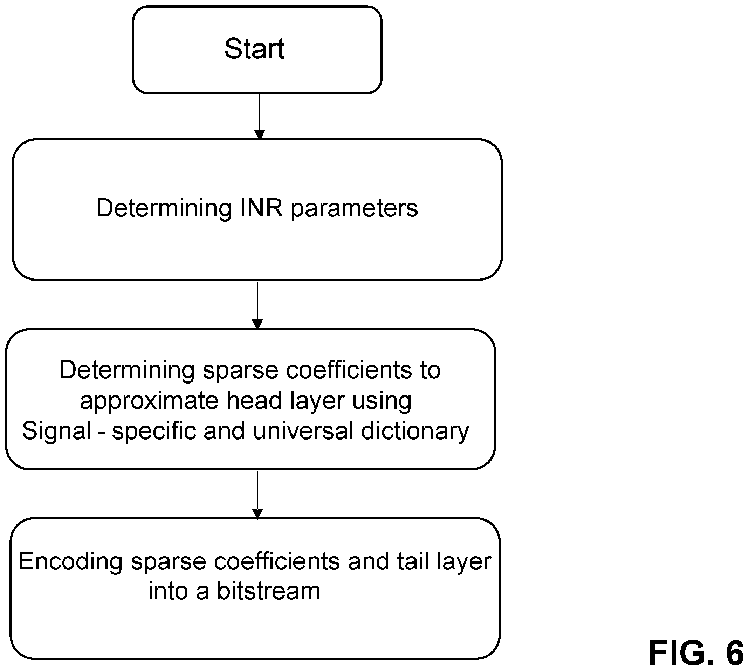

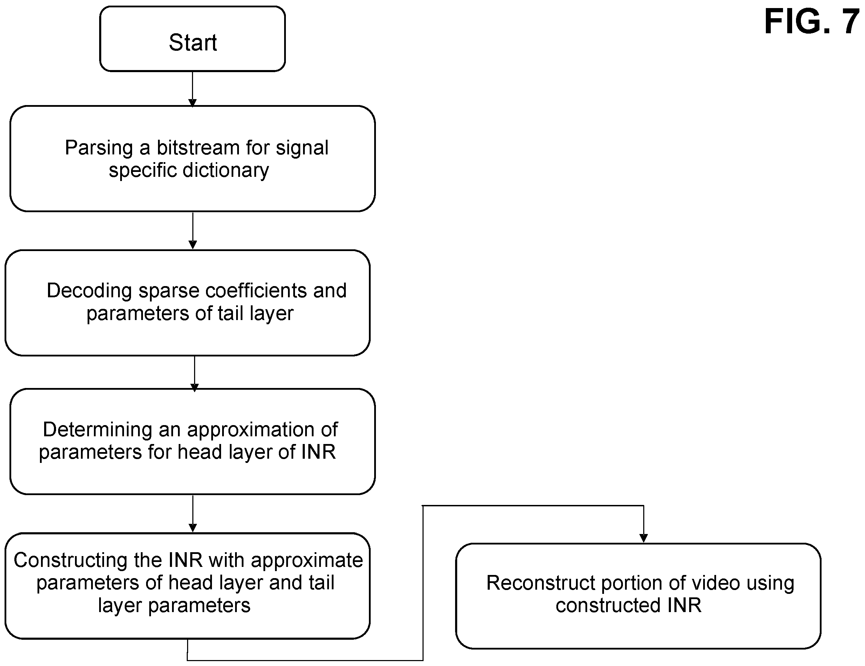

Example encoding and decoding procedures are shown in FIGs. 6 and 7, respectively.

Embedding layers of the coordinates may be present (e.g., before the head layers). For example, the embedding layers may include Fourier feature embedding or any other embedding technique. These embedding layers may be generated at the decoding side (e.g., without encoding them in the bitstream).

The dictionary learning may be performed at a (e.g., any) frame, set of frames (e.g., in any order), or the whole video. The dictionary learning may be performed at multiple scales.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

i. Encoding, into coded video data, syntax elements that can enable the decoder to decode the coded video data, according to any of the embodiments described herein.

ii. Video data (e.g., a bitstream) that may include one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. HTTP live Streaming (HLS) manifest transmitted over HTTP.

iii. DASH MPD descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for dequantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1. A method for video decoding, comprising:

   receiving a coding block and video data associated with the coding block, wherein the video data indicates a signal-specific implicit neural representation (INR) dictionary, INR tail parameters, and a coefficient matrix;
   determining a combined INR dictionary based on the signal-specific INR dictionary and a universal INR dictionary;
   constructing an INR based on the combined INR dictionary, the INR tail parameters, and the coefficient matrix; and
   reconstructing the coding block based on the INR.

2. The method of claim 1, wherein the method further comprises determining an approximation of INR head parameters based on the coefficient matrix and the combined INR dictionary, wherein constructing the INR is further based on the approximation of the INR head parameters.

3. The method of claim 1, wherein the coefficient matrix comprises mixture coefficients and the INR is a mixture of experts model.

4. The method of claim 1, wherein the coding block is associated with a signal, wherein a first part of the signal comprises a frame of the signal, and a second part of the signal comprises remaining frames of the signal, and wherein determining the signal-specific INR dictionary is based on the first part of the signal.

5. The method of claim 1, wherein the coding block is a first coding block associated with a first frame, the INR tail parameters are first INR tail parameters associated with the first frame, the coefficient matrix is a first coefficient matrix associated with the first frame, the INR is a first INR associated with the first frame, the video data further indicates second INR tail parameters, and a second coefficient matrix, and wherein the method further comprises:

   receiving a second coding block associated with a second frame;
   constructing a second INR based on the combined INR dictionary, the second INR tail parameters, and the second coefficient matrix; and
   reconstructing the second coding block based on the second INR.

6. The method of claim 1, wherein the signal-specific INR dictionary is orthogonal to the universal INR dictionary.

7. A method for video encoding, the method comprising:

   determining a signal-specific dictionary;
   determining a combined dictionary based on the signal-specific dictionary and a universal dictionary;
   determining implicit neural representation (INR) head parameters and INR tail parameters based on the combined dictionary;
   determining a coefficient matrix based on the combined dictionary; and
   including, in video data, the signal-specific dictionary, the INR tail parameters, and the coefficient matrix.

8. The method of claim 7, wherein the video data comprises a signal, and the method further comprises splitting the signal into a first part of the signal and a second part of the signal, wherein the first part of the signal comprises a frame of the signal, and the second part of the signal comprises remaining frames of the signal, and wherein determining the signal-specific dictionary is based on the first part of the signal.

9. The method of claim 7, wherein determining the coefficient matrix is further based on an approximation of the INR head parameters.

10. The method of claim 7, wherein the coefficient matrix comprises mixture coefficients and the INR is a mixture of experts model.

11. The method of claim 7, wherein the INR head parameters are first INR head parameters associated with a first frame, the INR tail parameters are first INR tail parameters associated with the first frame, the coefficient matrix is a first coefficient matrix associated with the first frame, the INR is a first INR associated with the first frame, and wherein the method further comprises:

determining second INR head parameters and second INR tail parameters associated with a second frame based on the combined dictionary;

determining a second coefficient matrix associated with the second frame based on the combined dictionary; and

including, in the video data, the second INR tail parameters, and the second coefficient matrix.

12. The method of claim 7, wherein the signal-specific dictionary is orthogonal to the universal dictionary.

13. A video decoding device comprising a processor configured to perform the method of at least one of claims 1-6.

14. A video encoding device comprising a processor configured to perform the method of at least one of claims 7-12.

15. A computer program product which is stored on a non-transitory computer readable medium and comprises program code instructions for implementing the steps according to the method of at least one of claims 1 to 12 when executed by a processor.

**FIG. 1**

EP 4 765 823 A1

FIG. 2

EP 4 765 823 A1

**FIG. 3**

FIG. 4

520 | Learn INR parameters |

530 | Encode INR parameters |

550 bitstream

**FIG. 5**

```
                        ┌─────────────────────┐
                        │                     │
                        │       Start         │
                        │                     │
                        └──────────┬──────────┘
                                   │
                                   ▼
                ┌──────────────────────────────────────┐
                │                                      │
                │      Determining INR parameters      │
                │                                      │
                └──────────────────┬───────────────────┘
                                   │
                                   ▼
                ┌──────────────────────────────────────┐
                │    Determining sparse coefficients to │
                │        approximate head layer using   │
                │  Signal - specific and universal      │
                │              dictionary               │
                └──────────────────┬───────────────────┘
                                   │
                                   ▼
                ┌──────────────────────────────────────┐
                │  Encoding sparse coefficients and     │
                │         tail layer                    │
                │          into a bitstream             │
                │                                      │
                └──────────────────────────────────────┘
```

**FIG. 6**

EP 4 765 823 A1

**FIG. 7**

Start

↓

Parsing a bitstream for signal specific dictionary

↓

Decoding sparse coefficients and parameters of tail layer

↓

Determining an approximation of parameters for head layer of INR

↓

Constructing the INR with approximate parameters of head layer and tail layer parameters

↓

Reconstruct portion of video using constructed INR

# EUROPEAN SEARCH REPORT

**Application Number**

EP 24 30 7250

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2024/078892 A1 (INTERDIGITAL CE PATENT HOLDINGS SAS [FR]) 18 April 2024 (2024-04-18) * page 6, line 14 - page 7, line 2 * * page 7, line 22 - page 8, line 14 * ----- | 1-15 | INV. H04N19/91 G06N3/045 G06N3/0495 G06N3/084 |
| Y | GAO SHENGHUA ET AL: "Learning Category-Specific Dictionary and Shared Dictionary for Fine-Grained Image Categorization", IEEE TRANSACTIONS ON IMAGE PROCESSING, IEEE, USA, vol. 23, no. 2, 1 February 2014 (2014-02-01), pages 623-634, XP011535403, ISSN: 1057-7149, DOI: 10.1109/TIP.2013.2290593 [retrieved on 2013-12-20] * section III.D * ----- | 1-15 | |
| Y | PEIHAO WANG ET AL: "Neural Implicit Dictionary via Mixture-of-Expert Training", ARXIV.ORG, CORNELL UNIVERSITY LIBRARY, 201 OLIN LIBRARY CORNELL UNIVERSITY ITHACA, NY 14853, 8 July 2022 (2022-07-08), XP091265963, * section 1 * ----- | 3,10 | TECHNICAL FIELDS SEARCHED (IPC) H04N G06N |

The present search report has been drawn up for all claims

| Place of search | Date of completion of the search | Examiner |
|---|---|---|
| Munich | 13 May 2025 | Regidor Arenales, R |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

                            
& : member of the same patent family, corresponding
   document

EPO FORM 1503 03.82 (P4C01)

## ANNEX TO THE EUROPEAN SEARCH REPORT
## ON EUROPEAN PATENT APPLICATION NO.

EP 24 30 7250

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2025

| Patent document cited in search report | Publication date | Patent family member(s) | Publication date |
|---|---|---|---|
| WO 2024078892 A1 | 18-04-2024 | NONE | |

For more details about this annex : see Official Journal of the European Patent Office, No. 12/82